Europäisches Patentamt

European Patent Office

Office européen des brevets

(11) Publication number : **0 683 978 A1**

## (12) EUROPEAN PATENT APPLICATION

(21) Application number : 95303559.9

(22) Date of filing : 25.05.95

(51) Int. Cl.6 : **A01N 37/44,** // (A01N37/44, 37:44, 33:12, 33:04)

(30) Priority : 25.05.94 GB 9410472

(43) Date of publication of application :
29.11.95 Bulletin 95/48

(84) Designated Contracting States :
AT BE DE DK ES FR GB GR IE IT NL PT SE

(71) Applicant : **RHONE-POULENC CHEMICALS LIMITED**
Oak House,
Reeds Crescent
Watford, Herts WD1 1QM (GB)

(72) Inventor : **Carr, John Frederick**
7 Romney Close
Gloucester GL1 5NT (GB)
Inventor : **Davies, Brian**
2 Stone Cross Drive
Sprotbrough, Doncaster (GB)
Inventor : **Jordan, Peter**
22 Cliff Park Rise
Leeds LS12 4XF (GB)

(74) Representative : **Ellis-Jones, Patrick George Armine**
J.A. KEMP & CO.
14 South Square
Gray's Inn
London WC1R 5LX (GB)

(54) **Biocidal composition.**

(57)    Compositions comprising N,N-bis(carboxymethyl)-glutamic acid or an alkali metal or ammonium salt thereof and a biocide show improved effectiveness in controlling microorganisms, including both Gram positive and Gram-negative microorganisms and fungi.

EP 0 683 978 A1

The present invention relates to biocidal compositions and methods for controlling microorganisms using such compositions.

It is known that the effects of a biocide can sometimes be increased by using it with a sequestering agent. Bactericidal preparations often prove to be much less effective under practical conditions of use than when tested under laboratory conditions. This is because the bactericidal activity of a biocide can be adversely affected by the hardness of the water in which it is used. The addition of a sequestering agent which is believed to bind calcium and magnesium ions present in hard water counteracts this effect.

It is also known that the chelating agent, ethylenediamine tetraacetic acid (EDTA), enhances the antimicrobial activity of biocides in distilled water as well as in hard water. It is believed that EDTA removes calcium and magnesium ions present in the membrane of the bacterial cells. This action is believed to increase the permeability of the membrane to biocides; see for example: Norda/Schimmel International, No. 412, September 1969; GB 858030 where it is stated that disinfectant formulations based on bactericidal phenol derivatives are made more effective against Pseudomonas aeruginosa by the addition of organic sequestering agents, in particular EDTA; and Journal of Applied Bacteriology 1977, **43**, p.p. 253-260 where it is reported that EDTA potentiates the effect of chloroxylenol on various Gram positive and Gram negative bacteria.

EDTA has the drawback that it is environmentally unfriendly because it is not biodegradable. Recent legislation bans it from certain applications. Thus alternatives to EDTA are needed.

One such alternative is nitrilotriacetic acid (NTA). However there are doubts about the safety of NTA.

The present invention provides biocidal compositions comprising a biocide and the chelating agent N,N-bis(carboxymethyl)glutamic acid, or an alkali metal or ammonium salt thereof, (hereinafter referred to by the abbreviation GLUDA).

GLUDA may be obtained more particularly by the following methods:

1. Glutamic acid is reacted with sodium monochloracetate under alkaline conditions.
2. Glutamic acid is reacted with sodium cyanide and formaldehyde under alkaline conditions.
3. Glutamic acid is reacted with hydrogen cyanide and formaldehyde under acid conditions.

It can also be obtained by the processes disclosed in, for example, USP 2 500 019 and GB 1 439 518.

GLUDA is biodegradable and breaks down into $CO_2$ and $H_2O$ without the formation of any undesirable by-products. Its superiority to EDTA and NTA in this respect is shown by the following results from the Zahn Wellens Inherent Biodegradability Test (OECD 302B):

| | |
|---|---|
| GLUDA.Na$_4$ | 100% |
| NTA.Na$_3$ | 99% |
| EDTA.Na$_3$ | 9% |

The stability constants for complexes of GLUDA with $Ca^{2+}$ and $Mg^{2+}$ are lower than those for NTA and EDTA as shown in the following data:

| | $Ca^{2+}$ | $Mg^{2+}$ |
|---|---|---|
| GLUDA.Na$_4$ | 5.4 | 4.9 |
| NTA.Na$_3$ | 6.4 | 5.4 |
| EDTA.Na$_3$ | 10.7 | 8.7 |

The stability constant of a metal chelate is the logarithm of the formation constant, K, for the following equilibrium reaction:

$$M + Y \rightleftharpoons MY$$

$$K = \frac{[MY]}{[M][Y]}$$

where [M] = activity of metal ion; [Y] = activity of chelating agent; [MY] = activity of metal chelate agent; and

$$\text{Stability Constant} = \log K$$

These figures suggest that GLUDA would be inferior to NTA and EDTA in increasing the effectiveness of biocides. However it has unexpectedly been found that GLUDA has a greater potentiating effect than NTA or EDTA.

In the compositions of the present invention the GLUDA is preferably used as the tetra sodium salt. The biocide and GLUDA are preferably present in a weight ratio of the active ingredients of from 10:1 to 1:100, more preferably 1:1 to 1:10. Biocides and GLUDA are generally supplied in diluted form, which may contain, for example, only 30% of the active ingredient. Thus these ratios have been expressed in terms of the relative weights of the active ingredients.

Biocides which may be used in the compositions of the present invention include:

a) Quaternary ammonium and phosphonium biocides: Coco-alkyl benzyl dimethyl ammonium chloride; $C_{12/14}$-alkyl benzyl dimethyl ammonium chloride; Lauryl $C_{12/14}$-alkyl-benzyl dimethyl ammonium chloride; Coco-alkyl 2,4-dichlorobenzyl dimethyl ammonium chloride; Tetradecyl benzyl dimethyl ammonium chloride; Diisobutyl phenoxy-ethoxy-ethyl dimethyl-benzyl ammonium chloride; Lauryl pyridinium chloride; $C_{12/14}$-alkyl Alkyl-benzyl imidazolinium chloride; Myristyl trimethyl ammonium bromide; Cetyl trimethyl ammonium bromide; Didecyl dimethyl ammonium chloride; Dioctyl dimethyl ammonium chloride; and Myristyl triphenyl phosphonium bromide.

b) Amphoteric biocides: N-(N'-$C_{8-18}$-alkyl-3-aminopropyl)-glycine derivatives; N-(N'-(N''-$C_{8-18}$-alkyl-2-aminoethyl)-2-aminoethyl)-glycine derivatives; and N,N-bis(N'-$C_{8-18}$-alkyl-2-aminoethyl)-glycine derivatives.

c) Amines: N-(3-aminopropyl)-N-dodecyl 1,3-Propanediamine.

d) Phenolics: Parachlorometaxylenol; and Dichlorometaxylenol.

The biocide used in the invention is preferably an amine, or an amphoteric or quaternary ammonium biocide, more preferably a N-(N'-$C_{8-18}$-alkyl-3-aminopropyl)-glycine derivative or a $C_{8-18}$-alkyl benzyl dimethyl ammonium chloride (where the alkyl group is preferably a $C_{12/14}$-alkyl group), or N-(3-aminopropyl)-N-dodecyl-1,3-propanediamine.

The present invention also provides a method of controlling microorganisms which comprises applying to a locus where such control is required N,N-dicarboxymethyl-2-aminopentane-1,5-dioic acid or a salt thereof and a biocide.

The microorganisms which may be controlled by the method of the present invention include:

(i) Gram negative bacteria: Pseudomonas aeruginosa; Escherichia coli; and Proteus mirabilis.

(ii) Gram positive bacteria: Staphylococcus aureus; and Streptococcus faecium.

(iii)Other harmful food bacteria: Salmonella typhimurium; Listeria monocytogenes; Campylobacter jejuni; and Yersinia enterocolitica.

(iv) Yeasts: Saccharomyces cerevisiae; and Candida albicans.

(v) Fungi: Aspergillus niger; Fusarium solani; and Penicillium chrysogenum.

(vi) Algae: Chlorella saccharophilia; Chlorella emersonii; Chlorella vulgaris; and Chlamydomonas eugametos.

The microorganisms controlled by the method of the present invention are preferably Gram negative microorganisms, especially Pseudomonas aeruginosa, Gram positive microorganisms, especially Staphylococcus aureus, and fungi e.g. Aspergillus niger.

The present invention is illustrated by the following examples, where percentages are percentages by weight.

## Example 1

In this example the effect of increasing the concentration of chelating agent on the amount of biocide required to prepare a biocidal composition was observed. The biocide used was Amphionic SFB™ (30% active) which is an amphoteric biocide based on a N-(N'-$C_{8-18}$-alkyl-3-aminopropyl) glycine derivative.

The test was carried out in distilled water at 22°C without added organic matter. The microorganism used was Pseudomonas aeruginosa ATCC 15442. The contact time was ten minutes and a mixture of 3% Tween 80 and 2% Soya Lecithin was used as the inactivator. The test was deemed to be successful if 99.99% of the microorganisms were killed.

The basic formulation of each composition was:

**TABLE 1**

| Amphionic SFB (30% active) | 5% |
|---|---|
| Sequestrant (38% active) | x% |
| Water | to 100% |

The following results were obtained for GLUDA.Na$_4$, NTA.Na$_3$, and EDTA.Na$_4$:

**TABLE 2**

| Sequestrant Concentration as 38% solution | 0% | 5% | 10% | 15% | 20% |
|---|---|---|---|---|---|
| Biocidal concentration of formulation containing GLUDA.Na$_4$ (%) | 0.67 | 0.17 | 0.13 | 0.11 | 0.10 |
| Biocidal concentration of formulation containing NTA.Na$_3$ (%) | 0.67 | 0.48 | 0.37 | 0.30 | 0.25 |
| Biocidal concentration of formulation containing EDTA.Na$_4$ (%) | 0.67 | 0.44 | 0.31 | 0.25 | 0.21 |

The figures quoted in this and all subsequent comparable Tables represent the percentage concentration of the formulation required to achieve a 99.99% kill.

These results show that compositions containing GLUDA are effective at lower concentrations and require less biocide than compositions containing the other sequestrants to achieve the same biocidal effect.

Example 2

This example is similar to Example 1 except that the biocide used was Rhodaquat RP™ (50% active) which is a quaternary ammonium biocide based on an C$_{12-14}$-alkyl benzyl dimethyl ammonium chloride derivative. The test conditions used were identical to those of Example 1.

The basic formulation of each composition was:

**TABLE 3**

| Rhodaquat RP50 (50% active) | 2% |
|---|---|
| Sequestrant (38% active) | x% |
| Water | to 100% |

The following results in Table 4 were obtained for GLUDA, NTA.Na$_3$, and EDTA.Na$_4$, respectively:

**TABLE 4**

| Sequestrant Concentration as 38% solution | 0% | 5% | 10% | 15% | 20% |
|---|---|---|---|---|---|
| Biocidal concentration of formulation containing GLUDA.Na$_4$ (%) | 0.33 | 0.13 | 0.08 | 0.06 | 0.045 |
| Biocidal concentration of formulation containing NTA.Na$_3$ (%) | 0.33 | 0.17 | 0.13 | 0.08 | 0.05 |
| Biocidal concentration of formulation containing EDTA.Na$_4$ (%) | 0.33 | 0.06 | 0.045 | 0.04 | 0.04 |

These results show that GLUDA has a greater potentiating effect than NTA.Na$_3$.

Example 3

In this example the effect of increasing the concentration of GLUDA on the amount of biocide required to prepare a biocidal composition was observed. The biocide used was Amphionic SFB™ (30% active). The test was carried out according to modified protocol BS:6471:1984. This test comprises using 200ppm hard water at 22°C containing 5% horse serum. The microorganism used was Pseudomonas aeruginosa ATCC 15442. The contact time was ten minutes and a mixture of 3% Tween 80 and 2% Soya Lecithin was used as the inactivator. The test was deemed successful if 99.99% of the microorganisms were killed.

The basic formulation of each composition was as shown in Table 1.

The results in Table 5 below were obtained:

## TABLE 5

| Sequestrant Concentration as 38% solution | 0% | 5% | 10% | 15% | 20% |
|---|---|---|---|---|---|
| Biocidal concentration of formulation containing GLUDA.Na$_4$ (%) | 16.0 | 4.0 | 2.5 | 1.7 | 1.4 |
| Biocidal concentration of formulation containing NTA.Na$_3$ (%) | 16.0 | 5.0 | - | 2.5 | - |

These results demonstrate that, even in hard water, the presence of GLUDA increases the effect of a biocide more than NTA.

## Example 4

This Example is similar to Example 3, using Amphionic SFB (Table 1) except that the micororganism used was Escherichia coli ATCC 11229, again testing to BS:6471:1984.

The results in Table 6 below were obtained.

## TABLE 6

| Sequestrant Concentration as 38% solution | 0% | 15% | 20% |
|---|---|---|---|
| Biocidal concentration of formulation containing GLUDA.Na$_4$ (%) | 2.5 | 1.7 | 1.7 |
| Biocidal concentration of formulation containing NTA.Na$_3$ (%) | 2.5 | 2.0 | 1.8 |

Here again the effect of GLUDA is better than that of NTA.

## Example 5

In this Example, the effect of the formulation shown in Table 1 using Amphionic SFB, was determined against a Gram positive bacterium, namely Staphyloccocus aureus ATCC 6538.

The results shown in Table 7 were obtained by dilution with distilled water using the same conditions as described in Example 1.

## TABLE 7

| Sequestrant Concentration as 38% solution | 0% | 5% | 10% | 15% |
|---|---|---|---|---|
| Biocidal concentration of formulation containing GLUDA.Na$_4$ (%) | 0.25 | 0.20 | 0.14 | 0.125 |
| Biocidal concentration of formulation containing NTA.Na$_3$ (%) | 0.25 | 0.17 | 0.25 | 0.33 |

Here the beneficial effect of GLUDA is observed at all sequestrant levels but the beneficial effect of NTA disappears at levels greater than 5%.

## Example 6

The formulation containing Rhodaquat RP50 and GLUDA in Table 3 was tested against both Gram negative Pseudomonas aeruginosa ATCC 15442 and Gram positive Staphylococcus aureus ATCC 6538 using the protocol of BS:6471:1984. Results are shown in Table 8.

## TABLE 8

| GLUDA.Na$_4$ concentration as 38% solution | 0% | 5% | 10% | 15% | 20% |
|---|---|---|---|---|---|
| Biocidal concentration of formulation vs. Ps.aeruginosa (%) | 4.0 | 4.0 | 2.5 | 1.67 | 1.00 |
| Biocidal concentration of formulation vs. St.aureus (%) | 1.0 | 0.8 | 0.71 | 0.62 | 0.5 |

The beneficial effect of the sequestrant is observed in both cases.

Example 7

The formulation in Table 9 containing (N-(3-aminopropyl)-N-dodecyl-1,3-propanediamine (ADPD) was tested against both Gram negative Pseudomonas aeruginosa ATCC 15442 and Gram positive Staphylococcus aureus ATCC 6538 using the protocol of BS:6471:1984. Results are shown in Table 10.

**TABLE 9**

| ADPD (30% active) | 2% |
|---|---|
| GLUDA.Na$_4$ (38% active) | X% |
| Water | to 100% |

**TABLE 10**

| GLUDA.Na$_4$ concentration as 38% solution | 0% | 5% | 10% | 15% | 20% |
|---|---|---|---|---|---|
| Biocidal concentration of formulation vs. Ps.aeruginosa (%) | 10.0 | 4.0 | 2.5 | 1.67 | 1.67 |
| Biocidal concentration of formulation vs. St.aureus (%) | 1.67 | 1.25 | 0.80 | 0.67 | 0.67 |

The beneficial effect of the sequestrant is observed in both cases.

Example 8

Both formulations in Table 1 and Table 3, containing GLUDA, were tested against the fungus Aspergillus niger ATCC 16404 using a fungistatic minimum inhibitory concentration test (m.i.c) at 28°C, diluting with distilled water.

The results are shown in Table 11.

**TABLE 11**

| GLUDA.Na$_4$ Concentration as 38% solution | 0% | 5% |
|---|---|---|
| M.I.C of formulation containing Amphionic SFB (%) | 0.67 | 0.44 |
| M.I.C of formulation containing Rhodaquat RP50 (%) | 0.33 | 0.2 |

Addition of GLUDA improves the biocide performance in both cases.
Addition of GLUDA improves the biocide performance in both cases.

**Claims**

1. A composition comprising N,N-bis(carboxymethyl)glutamic acid or an alkali metal or ammonium salt thereof and a biocide.

2. A composition according to claim 1 wherein the salt is the tetra sodium salt.

3. A composition according to claim 1 or 2 wherein the biocide is an amine, or an amphoteric or quaternary ammonium biocide.

4. A composition according to claim 1 or 2 wherein the biocide is N-(3-aminopropyl)-N-dodecyl-1,3-propanediamine.

5. A composition according to claim 1 or 2 wherein the biocide is an N-(N'-C$_{8-18}$-alkyl 3-aminopropyl)-glycine.

6. A composition according to claim 1 or 2 wherein the biocide is an alkyl benzyl dimethyl ammonium chloride.

7. A composition according to any one of claims 1 to 6 wherein the biocide and said acid or salt thereof are present in a weight ratio of the active ingredients of from 10:1 to 1:100.

8. A composition according to claim 7 wherein the ratio is from 1:1 to 1:10.

9. A method of controlling microorganisms at a locus which comprises applying to a locus where such control is desired N,N-bis(carboxymethyl)glutamic acid or an alkali metal or ammonium salt thereof and a biocide.

10. A method according to claim 9 which comprises applying a composition according to any one of claims 1 to 8.

11. A method according to claim 9 or 10 wherein the microorganism is a Gram negative microorganism.

12. A method according to claim 11 wherein the microorganism is Pseudomonas aeruginosa.

13. A method according to claim 9 or 10 wherein the microorganism is a Gram positive microorganism.

14. A method according to claim 13 wherein the microorganism is Staphylococcus aureus.

15. A method according to claim 9 or 10 wherein the microorganism is a fungus.

16. A method according to claim 15 wherein the microorganism is Aspergillus niger.

EP 0 683 978 A1

**European Patent Office**

# EUROPEAN SEARCH REPORT

Application Number
EP 95 30 3559

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | CHEMICAL ABSTRACTS, vol. 72, no. 3, 19 January 1970 Columbus, Ohio, US; abstract no. 11588k, G.REYBROUCK ET AL. 'Effect of ethylenediaminetetraacetate on the germicidal action of disinfectants against Pseudomonas aeruginosa' * abstract * & ACTA CLIN. BELG. , vol. 24, no. 1, 1969 pages 32-41, | 1-16 | A01N37/44 //(A01N37/44, 37:44,33:12, 33:04) |
| A | FR-A-1 580 196 (HENKEL & CIE GMBH) * page 1 - page 2 * | 1-16 | |
| A | US-A-3 932 655 (R.H.CONN) * column 1, line 51 - column 2, line 36; examples * | 1-16 | |
| D,A | GB-A-1 439 518 (LES PRODUIT ORGANIQUES DU SANTERRE-ORSAN ET AL.) * page 1, line 14 - line 34 * * page 1, line 76 - page 2, line 3 * * page 3, line 46 - page 4, line 31; example 3 * | 1-16 | TECHNICAL FIELDS SEARCHED (Int.Cl.6) A01N |
| X | * example 5 * | 1,7 | |

-/--

The present search report has been drawn up for all claims

| Place of search | Date of completion of the search | Examiner |
|---|---|---|
| THE HAGUE | 4 September 1995 | Muellners, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

European Patent
Office

**EUROPEAN SEARCH REPORT**

Application Number

EP 95 30 3559

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | TEXTILVEREDLUNG, vol. 28, no. 5, May 1993 WEINFELDEN,CH, pages 140-146, H.BACHUS & S.HELD-BELLER 'Umweltentlastende Komplexbildner mit Bestandteilen nachwachsender Rohstoffe' * page 140 - page 141, column 3, paragraph 4 * * page 146, column 1, paragraph 3 - column 3 * | 1-16 | |
| X | * page 142, column 2, last paragraph - page 143, column 3 * | 1,7 | |
| A | US-A-5 276 047 (H.EGGENSPERGER ET AL.) * the whole document * | 1-16 | |
| A | EP-A-0 392 250 (RIEDEL-DE HAEN AG) * claims * | 1-16 | |

TECHNICAL FIELDS
SEARCHED     (Int.Cl.6)

The present search report has been drawn up for all claims

| Place of search | Date of completion of the search | Examiner |
|---|---|---|
| THE HAGUE | 4 September 1995 | Muellners, W |